# EUROPEAN PATENT SPECIFICATION

(11) **EP 3 001 273 B1**
(45) Date of publication and mention of the grant of the patent: **07.10.2020**
(21) Application number: 15183002.3
(22) Date of filing: 28.08.2015
(51) Int. Cl.: G05D 23/19, F24D 19/10

(54) **DEVICE FOR REGULATING TEMPERATURE AND FOR ALLOCATING CONSUMPTION OF A HEATING ELEMENT**
GERÄT ZUR TEMPERATURREGELUNG UND ZUR ZUORDNUNG DES VERBRAUCHS EINES HEIZELEMENTS
APPAREIL POUR LA RÉGULATION DE LA TEMPÉRATURE ET POUR L'ATTRIBUTION DE LA CONSOMMATION D'UN ÉLÉMENT DE CHAUFFAGE

(30) Priority: 23.09.2014 IT BS20140173
(43) Date of publication of application: 30.03.2016
(73) Proprietor: I.V.A.R. S.P.A., 25080 Prevalle (BS) (IT)
(72) Inventor: BERTOLOTTI, Umberto, 25080 Prevalle (BS) (IT)
(74) Representative: PGA S.p.A., Milano, Succursale di Lugano

(56) References cited:
- EP-A1- 1 033 640
- DE-A1- 10 162 603
- DE-A1-102010 033 428
- GB-A- 2 501 488

## Description

The present invention relates to a device for regulating temperature and for allocating consumption of a heating element located in a room of a building. The invention further relates to a method for regulating temperature and for allocating consumption of heating element, in particular of radiant type. The invention is advantageously used for heat regulation and for consumption allocation in rooms of residential or commercial buildings provided with radiant heating element, though it could also be advantageously used in other types of systems.

The present invention belongs to the technical field of heating systems and concerns in particular the parts for regulating temperature and for calculating costs related to the heating system.

At the state of the art various types of heating systems for residential or commercial buildings are known, among which e.g. standpipe systems, in which one or more radiant elements or radiators are generally provided in each room. In this case at least one room for each flat or dwelling unit is provided with a thermostat comprising a sensor apt to detect ambient temperature, which can be set - as a rule manually - so as to define a desired ambient temperature. The thermostat controls the operation of the heating system so as to define the amount of heat supplied by a boiler to the heating elements by means of hot water conveying pipes, in order to adjust actual ambient temperature to the value set on the thermostat. It is further known about the use of chrono-thermostats which enable an hourly programming of ambient temperature and control the operation of the heating system according to this programming. It is further known, in case radiators are used, to apply to each radiator or at least to some radiators a heat-regulating element which enables to define and further differentiate the temperature desired for each specific radiator and thus for the corresponding installation room, with respect to the temperature defined by the thermostat for the environment. These heat-regulating elements can consist of thermostatic heads comprising a thermostat acting upon a shut-off valve for the fluid flowing in the heating system so as to regulate the amount of fluid which can enter the radiator and thus modify the temperature of the radiator itself and the amount of heat supplied to the installation room. Each thermostatic head generally enables a manual regulation of an initial setting position, usually referred to with merely indicative numbers, which allows to approximately vary the temperature of the specific room with respect to the temperature defined for the environment by the thermostat or chrono-thermostat. A second type of known heat-regulating elements consists of electronic or electrothermal systems comprising a motor-operated actuator acting upon the shut-off valve. This electric actuator is controlled by means of a sensor which can be mounted into the actuator itself or positioned inside the room in which the radiator is located and detects the temperature in the room thus controlling the opening or closing movement of the motor and therefore of the shut-off valve. Also these electronic systems are provided with a regulation of an initial setting position remotely controlled directly by a thermostat or chrono-thermostat.

The electronic heat-regulating systems directly operating on a single radiator are typically supplied by a battery, since it is quite complex to reach every single radiator with the electrical power network. The user can automatically replace the battery when it is low. The battery of the electronic system typically supplies the actuator acting upon the valve, the radio communications means with the thermostat or chrono-thermostat, the processing unit, the display if present, etc.

It is also known about devices, known as "allocators" or "counters", which are applied to the radiator and calculate the consumption of the radiator itself, i.e. the amount of heat energy used by the radiator during operation. The allocator comprises inside an electronic processing unit whose task is to calculate the consumption in time associated to the radiator onto which it is installed. To this purpose it typically uses at least one temperature sensor detecting the surface temperature of the radiator; on the basis of this temperature measure and using specific algorithms loaded into its processing unit, the allocator supplies a value of the radiator consumption with respect to the total amount of heat energy used by the whole heating system. In essence, each radiator inside the heating system has its own allocator and all the allocators send their consumption data to a control unit which collects data and allows to associate to each radiator the consumption fraction related thereto. To this purpose the allocators are provided with communications means, typically wireless, for sending and receiving data to/from the control unit. Also the allocators are typically equipped with an internal battery, since it is quite complex to reach every single radiator with the electrical power network; the battery supplies the electronic components of the allocator with electric energy.

There are specific regulations ruling the construction and use of allocators. It is quite obvious that these devices should operate on a continuous basis without any possibility of being switched off or tampered with by the user: as a matter of fact, the correct calculation of consumption in a heating system necessarily depends on the correct operation of all the allocators present therein. Should an allocator be tampered with or switched off in order not to meter the consumption of a radiator, the whole calculation of consumption fractions would be jeopardized. It should be pointed out that consumption allocation can involve several dwelling units inside a building or block of flats having a centralized heating system and it is exactly based on the allocation that costs are allocated to each dwelling unit.

For this reason regulations require that the battery of an allocator cannot be accessed by the user (i.e. it must be closed inside the allocator body). Typically, battery life is of some years, then specialized technicians (sent by authorized firms or service centers) are required to replace the battery and recover distribution function. Generally, at the state of the art it is known about the use - on a single radiator - of a heat regulator managing the comfort level of the room in which it is installed, and of an allocator metering radiator consumption. The Applicant has found that this known solution is not without drawbacks and can be improved under various aspects. As a matter of fact, this solution envisages the use of two distinct devices on each radiator and this involves high costs. Moreover, the battery of the heat regulator can be replaced by the user whereas the battery of the allocator cannot be replaced autonomously and requires - as provided by law - the intervention of specialized personnel. It is quite obvious that this intervention is expensive and introduces organizational problems since it is necessary to intervene on several devices scattered in a large number of dwelling units. Another solution known in the field envisages the use of one device which has to be applied to a radiator and is able to act both as a heat regulator and as an allocator. This device has the advantages of being one for a single radiator, but it has further drawbacks. As a matter of fact, it is quite obvious that it cannot be envisaged that the user can replace the battery of this device autonomously: since this device integrates the allocator function, it must therefore comply with the regulations ruling the use of allocators. This integrated device has therefore a "shielded" battery which does not allow the access thereto.

The Applicant has found that these devices integrating a heat regulator and an allocator again have the drawback of requiring the intervention of specialized personnel whenever the battery runs out. More to the point, the fact that the device integrates two functions makes the situation even worse since the heat-regulating part (with the presence of actuator on the shut-off valve) requires a large amount of electric energy, which results in an early exhaustion of the battery with respect to the solution with heat regulator and allocator separated from each other. This involves the need for even more frequent battery replacement interventions and therefore managing difficulties for service centers.

It is further known from patent DE102010033428 a controller for actuator, such as radiator valve of heating controller, having a voltage supply, a communication module designed as a receiver for control commands and an actuator control for an actuator, wherein the voltage supply has an energy converter, for converting ambient energy into electrical energy, and an energy storage for storing the converted energy. Patent DE10162603 describes a radiator valve fitted with a separate control unit, which is attached to it by hooks which are held in position by a biasing spring; the control unit also holds a battery. Patent EP1033640 describes a thermostatically controlled heating valve having the position of the valve stage varied to maintain a flow condition by expansion and contraction of a thermostat element; the set point can be changed by a motor and ring gear actuator. The heating valve comprise an actuator module which is produced as a separate unit that houses the motor and has a locating surface and an opening to receive the gear.

Under these circumstances, the aim underlying the present invention in its various aspects and/or embodiments is to provide a device and a method for regulating temperature and for allocating consumption of a heating element, which can obviate one or more of the drawbacks mentioned above.

A further aim of the present invention is to provide a device and a method for regulating temperature and for allocating consumption of a heating element, which can solve the problems related to the continuous need for specialized technicians for replacing the battery.

A further aim of the present invention is to provide a device and a method for regulating temperature and for allocating consumption of a heating element, which comply with the regulations about allocators, in particular the regulations about allocator battery.

A further aim of the present invention is to provide a device and a method for regulating temperature and for allocating consumption of a heating element, which can regulate heat and allocate in an efficient manner.

A further aim of the present invention is to provide a device for regulating temperature and for allocating consumption of a heating element, which cannot be switched off or tampered with.

A further aim of the present invention is to provide a device for regulating temperature and for allocating consumption of a heating element, which allows to provide a radiator with heat-regulating and allocating functions in a simple and fast manner.

A further aim of the present invention is to provide a device for regulating temperature and for allocating consumption of a heating element, characterized by a high operating reliability and/or to a lower susceptibility to failure and malfunctions.

A further aim of the present invention is to provide a device for regulating temperature and for allocating consumption of a heating element, characterized by a simple and rational structure.

A further aim of the present invention is to provide a device for regulating temperature and for allocating consumption of a heating element, characterized by low manufacturing costs with respect to offered performance and quality.

These aims and others which shall be more manifest from the following description are basically achieved by a device and a method for regulating temperature and for allocating consumption of a heating element according to one or more of the appended claims, each of them being considered alone (without its dependent claims) or in any combination with the other claims, and according to the following aspects and/or embodiments, variously combined with each other, also with the aforesaid claims.

In a first aspect thereof, the invention relates to a device for regulating temperature and for allocating consumption of a heating element, comprising:
- a box-shaped body configured for being associated or mounted to a heating element, in particular to a radiator;
- heat-regulating organs configured for regulating the operation of the heating element so as to obtain a desired temperature in the environment where the radiant element is installed;
- allocating organs configured for calculating the amount of emitted heat, or consumed thermal energy, over time by the heating element.

In one aspect, the device further comprises:
- a first section inside said box-shaped body, selectively accessible from outside;
- a first battery (or first electric energy storage organ) housed in said first section;
- a second section inside said box-shaped body, inaccessible from outside;
- a second battery (or second electric energy storage organ) housed in said second section.

In one aspect, in a first operating condition in which said first battery is charged, said first battery is configured for supplying at least said heat-regulating organs, and in a second operating condition in which said first battery is low, said second battery is configured for supplying said allocating organs.

In one aspect, in said first operating condition said first battery is configured for supplying also said allocating organs and said second battery does not supply the allocating organs; as an alternative, in said first operating condition said first battery is configured for supplying said heat-regulating organs and said second battery is configured for supplying said allocating organs. In one aspect, in said second operating condition the second battery supplies said allocating organs only and the heat-regulating organs are not supplied.

In one aspect, in said first operating condition only the first battery operates, supplying both the heat-regulating organs and the allocating organs. In one aspect, in said second operating condition only the second battery operates, supplying the allocating organs only.

In one aspect, the heating element is a radiator or a heater or a heat convector. In one aspect, the heat-regulating organs are included in or associated to said first section. In one aspect, the box-shaped body is configured for being mounted to a heating element so that the heat-regulating organs are located at an inlet duct for hot fluid into the heating element.

In one aspect, the heat-regulating organs comprise at least a shut-off valve for the hot fluid entering the heating element, which can be selectively operated for regulating the amount of hot fluid entering the radiant element as a function of the desired temperature in the environment where the radiant element is installed. In one aspect, the heat-regulating organs comprise at least a temperature sensor configured for detecting temperature in the environment where the radiant element is installed.

In one aspect, the heat-regulating organs comprise an actuator operatively acting upon said shut-off valve for selectively controlling the opening or closing thereof, and thus for regulating the amount of hot fluid entering the radiant element, as a function of the difference between the environment temperature value detected by said temperature sensor and said desired temperature for the environment where the radiant element is installed.

In one aspect, the heat-regulating organs comprise a processing unit configured for managing the operation at least of said temperature sensor and of said actuator.

In one aspect, the heat-regulating organs comprise a regulating element configured for manually setting the value of said desired temperature.

In one aspect, the first battery is configured for electrically supplying at least said actuator, said temperature sensor and said processing unit of the heat-regulating organs.

In one aspect, the allocating organs are included in or associated to said second section. In one aspect, the allocating organs comprise at least a processing unit configured for calculating or estimating or measuring the amount of emitted heat, or used thermal energy, over time by the heating element. In one aspect, said processing unit of the heat-regulating organs corresponds to said processing unit of the allocating organs.

In one aspect, the allocating organs comprise a first temperature sensor configured for detecting a first temperature value related to the temperature of the hot fluid entering the heating element.

In one aspect, said first temperature sensor is configured for detecting the outer temperature with respect to the environment in which the heating element is installed, or the temperature of the hot fluid entering the heating element, or a surface temperature of the heating element.

In one aspect, the processing unit of the allocating organs is configured for calculating by way of an algorithm a heat consumption value of the heating element which is related or proportional to said first temperature value. In one aspect, the allocating organs comprise a second temperature sensor configured for detecting a second temperature value related to the temperature of the environment in which the heating element is installed. In one aspect, said second temperature sensor is configured for directly detecting the temperature of the environment in which the heating element is installed, or the temperature of the hot fluid getting back into the heating element.

In one aspect, the processing unit of the allocating organs is configured for calculating by way of an algorithm a heat consumption value of the heating element which is related or proportional to said first temperature value and/or to said second temperature value, e.g. which is related or proportional to the difference between said first temperature value and said second temperature value.

In one aspect, the second battery is configured for electrically supplying at least said first temperature sensor, said second temperature sensor and said processing unit of the allocating organs.

In one aspect, said box-shaped body is one only.

In one aspect, the first section and the second section are integrated into said box-shaped body. In other words, the first section and the second section are not distinct or separated but are included in the same box-shaped body of the device.

In one aspect, the first section comprises at least said first battery and the second section comprises at least said second battery.

In one aspect, the first battery is removably housed in said first section. In one aspect, the second battery is unremovably housed in said second section. In one aspect, the first battery is configured for being autonomously replaceable by a user.

In one aspect, the second battery is configured for not being autonomously replaceable by a user, i.e. for being replaced by a specialized technician and/or by means of tools.

In one aspect, the first battery and/or the second battery are of rechargeable type. In one aspect, the device comprises recharging organs configured for enabling an electric energy transfer from the first battery to the second battery, so as to recharge the second battery.

In one aspect, said recharging organs transfer electric energy from the first battery to the second battery when the first battery is charged.

In one aspect, said recharging organs transfer electric energy from the first battery to the second battery when the first battery has a charge level above a given charge threshold.

In one aspect, said recharging organs transfer electric energy from the first battery to the second battery when the first battery has just been replaced and/or as a result of an external command, e.g. the activation of a recharge button.

In one independent aspect thereof, the invention relates to a heating element, e.g. a radiator, comprising at least a device for regulating temperature and for allocating consumption according to one or more of the above aspects and/or one or more of the claims.

In one independent aspect thereof, the invention relates to a method for regulating temperature and for allocating consumption of a heating element, comprising the following steps:
- providing a device for regulating temperature and for allocating consumption of a heating element comprising:
- a box-shaped body configured for being associated or mounted to a heating element, in particular to a radiator;
- heat-regulating organs configured for regulating the operation of the heating element so as to obtain a desired temperature in the environment where the radiant element is installed;
- allocating organs configured for calculating the amount of emitted heat, or consumed thermal energy, over time by the heating element;
- a first section inside said box-shaped body, selectively accessible from outside with the device mounted and/or installed;
- a first electric energy storage organ, or first battery, housed in said first section;
- a second section inside said box-shaped body, inaccessible from outside with the device mounted and/or installed;
- a second electric energy storage organ, or second battery, housed in said second section;
- associating or mounting said box-shaped body of the device to a heating element, in particular to a radiator. In one aspect, the method comprises the step of selectively operating said device at least between:
- a first operating condition, in which said first battery is charged and supplies at least said heat-regulating organs;
- a second operating condition, in which said first battery is low and said second battery supplies said allocating organs.

In one aspect, in said first operating condition said first battery supplies also said allocating organs and said second battery does not supply the allocating organs, or in said first operating condition said first battery supplies said heat-regulating organs and said second battery supplies said allocating organs.

In one aspect, in said second operating condition the second battery supplies said allocating organs only and the heat-regulating organs are not supplied.

In one aspect, the passage from said first operating condition to said second operating condition takes place (automatically) when the first battery is low.

In one aspect, in said first operating condition both the heat-regulating organs and the allocating organs operate, and the device acts as a heat regulator and as an allocator.

In one aspect, in said second operating condition only the allocating organs operate and the device acts as an allocator only.

In one aspect, the method comprises a step of replacing the first battery of the device when this is in the second operating condition, such replacement (automatically) causing the passage from said second operating condition to said first operating condition.

In one aspect, the method comprises a step of transferring electric energy from the first battery to the second battery, so as to recharge the second battery.

In one aspect, said step of transferring electric energy from the first battery to the second battery takes place when the first battery is charged and/or when the first battery has a charge level above a given charge threshold and/or when the first battery has just been replaced and/or as a result of an external command, e.g. the activation of a recharge button.

In one aspect, in said first operating condition only the first battery operates, supplying both the heat-regulating organs and the allocating organs. In one aspect, in said second operating condition only the second battery operates, supplying the allocating organs only.

Each one of the aforesaid aspects of the invention can be considered alone or in combination with any one of the claims or of the other aspects described.

Further characteristics and advantages will be more apparent from the detailed description of some embodiments, among which also a preferred embodiment, which are exemplary though not exclusive, of a device and a method for regulating temperature and for allocating consumption of a heating element according to the present invention. This description will be quoted below with reference to the accompanying drawings, provided to an indicative and therefore non-limiting purpose, in which:
- Figure 1 schematically shows the structure of a possible embodiment of a device for regulating temperature and for allocating consumption of a heating element according to the present invention;
- Figure 2 shows a schematic front view of a device according to the present invention, by way of example mounted to a radiator.

With reference to the mentioned figures, the numeral 1 globally refers to a device for regulating temperature and for allocating consumption of a heating element according to the present invention. In general, the same numeral is used for similar or identical elements, if necessary in their variants of embodiment.

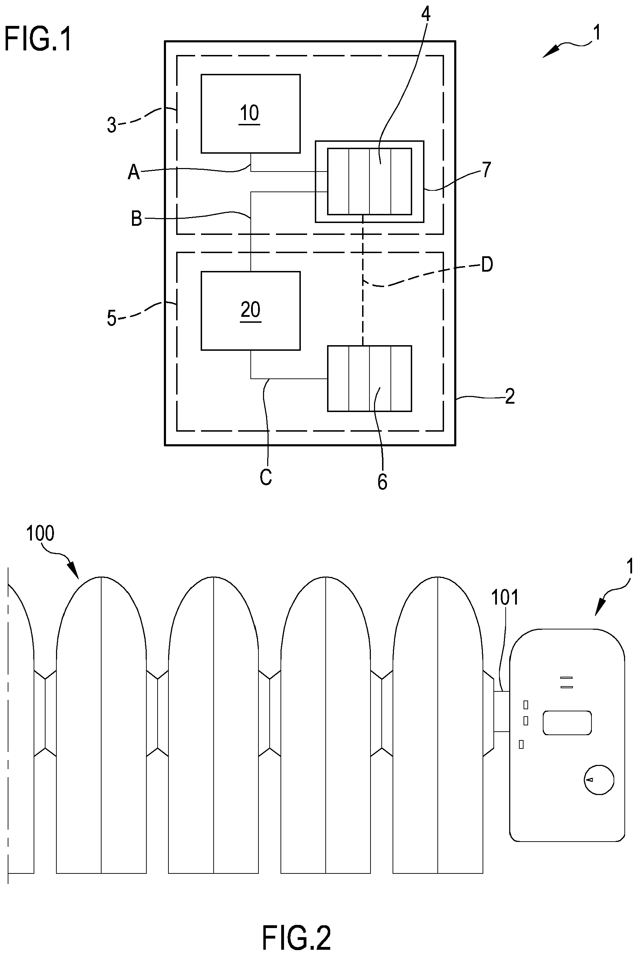

Figure 1 schematically shows the structure or architecture of a possible embodiment of a device 1 according to the present invention, designed to be associated to a heating element 100 being part of a heating system and located in a room or environment.

First of all, as schematically shown in Figure 2, the heating element 100 - to which the device 1 is designed to be mounted - is typically a radiator or a heater or a heat convector.

In Figure 1 the device 1 is schematically shown, with its components represented as functional blocks. Preferably, these components are individually known per se in the technical field of the present invention and are therefore not depicted or described in detail.

The device 1 comprises:
- a box-shaped body 2 configured for being mounted to a heating element 100, in particular to a radiator;
- heat-regulating organs 10 configured for regulating the operation of the heating element 100 so as to obtain a desired temperature in the environment where the radiant element is installed;
- allocating organs 20 configured for calculating the amount of emitted heat, or consumed thermal energy, over time by the heating element;
- a first section 3 inside the box-shaped body 2, selectively accessible from outside with the device mounted (i.e. installed on the radiator);
- a first electric energy storage organ 4, or first battery 4, housed in the first section 3;
- a second section 5 inside the box-shaped body 2, inaccessible from outside with the device mounted (i.e. installed on the radiator);
- a second electric energy storage organ 6, or second battery 6, housed in the second section 5.

The wording "accessible from outside" means that the first section can be opened, reached and/or inspected by a user when the device is mounted (i.e. assembled) and/or when it is installed to a radiator.

The wording "inaccessible from outside" means that the first section cannot be opened, reached and/or inspected by a user when the device is mounted (i.e. assembled) and/or when it is installed to a radiator, unless tools are used to remove the box-shaped body.

The device 1 is configured and arranged so that, in a first operating condition in which the first battery is charged 4, this first battery is configured for supplying at least the heat-regulating organs 10, and in a second operating condition in which the first battery 4 is low, the second battery 6 is configured for supplying the allocating organs 20.

In essence, the device 1 is at the same time both a heat regulator and an allocator, i.e. it integrates into one device the heat-regulating and the allocating functions, and comprises at least a first battery 4 and a second battery 6, configured for supplying the heat-regulating organs 10 and the allocating organs 20 according to specific logical rules.

In the framework of the present description and claims, the term "heat regulation" generally means the set of operations performed by a device acting upon one or more heating elements such as radiators in order to regulate over time the temperature of the environment where these heating elements are installed, according to a set of desired parameters, e.g. a desired temperature value. Practically, heat regulation comprises all the functions performed by thermostats, chrono-thermostats, thermostatic heads, electrothermal heads or electronic systems, temperature sensors, and other devices in a heating system so as to bring ambient parameters to a desired comfort level.

The term "allocation" generally means the calculation of energy consumption, as thermal energy consumed over one time unit, associated to a heating element, typically a radiator, of a heating system. Allocations means the calculation (or "metering") of the consumption of a single heating element proportionally to the total consumption of the whole heating system. In other words, the consumption of a single heating element, calculated by means of the allocator associated thereto, can be quantified only if the values expressed by all the others allocators associated to the remaining heating elements operating in the same heating system (e.g. in a block of flats or in a building) are known.

The term "supply" associated to batteries means supplying with the necessary electric energy the electric or electronic components present in the device making the object of the present invention, such as e.g. the actuator of the heat-regulating organs, the various sensors, the processing units, the communication organs, etc. The wording "electric energy storage organ", or battery, means an electric component which is able to store and release electric energy, e.g. a cell, an accumulator, a condenser, etc.

Preferably, in one preferred embodiment, in the aforesaid first operating condition the first battery 4 is configured for supplying also the allocating organs 20 and the second battery 6 does not supply the allocating organs. As an alternative, in the aforesaid first operating condition the first battery 4 is configured for supplying the heat-regulating organs and the second battery 6 is configured for supplying said allocating organs.

Preferably, in the aforesaid second operating condition (first battery low) the second battery 6 supplies the allocating organs 20 only whereas the heat-regulating organs are not supplied.

Preferably, in the aforesaid first operating condition only the first battery 4 operates, supplying both the heat-regulating organs 10 and the allocating organs, whereas in the second operating condition only the second battery 6 operates, supplying the allocating organs 20 only.

In essence, the first battery 4 is a "main battery" of the device 1, which normally (i.e. in the aforesaid first operating condition) supplies both the heat-regulating organs 10 and the allocating organs 20, and its task is basically to operate the whole device. The second battery 6 is instead a "buffer battery" which preferably operates only when the main battery is low (second operating condition) and only for supplying the allocating organs, so as to allow the device to continue operation as an allocator, although it does not act as a heat regulator.

Figure 1 schematically shows the electrical supply paths inside the device 1:
- letter A indicates the supply path for the heat-regulating organs 10 by the first battery 4 when the device is in the first operating condition;
- letter B indicates the preferred supply path of the allocating organs 20 by the first battery 4 when the device is in the first operating condition;
- letter C indicates the supply path of the allocating organs 20 by the second battery 6 when the device is in the second operating condition (the first battery is low).

Preferably, as schematically shown in Figure 1, the heat-regulating organs 10 are included in, or associated to, said first section 3.

Preferably (as shown in Figure 2), the box-shaped body 2 is configured for being mounted to a heating element 100 so that the heat-regulating organs are located at an inlet duct 101 for hot fluid into the heating element.

Preferably, this hot fluid is hot water produced by a heating system, typically a boiler (not shown).

Preferably, the heat-regulating organs 10 comprise at least a shut-off valve for the hot fluid entering the heating element, which can be selectively operated for regulating the amount of hot fluid entering the radiant element as a function of the desired temperature in the environment where the radiant element is installed. Preferably, the heat-regulating organs comprise at least a temperature sensor configured for detecting temperature in the environment where the radiant element is installed.

Preferably, the heat-regulating organs comprise an actuator operatively acting upon said shut-off valve for selectively controlling the opening or closing thereof, and thus for regulating the amount of hot fluid entering the radiant element, as a function of the difference between the environment temperature value detected by the temperature sensor and the desired temperature for the environment where the radiant element is installed.

Preferably, the heat-regulating organs comprise a processing unit configured for managing the operation at least of the aforesaid temperature sensor and of said actuator.

Preferably, the heat-regulating organs comprise a regulating element configured for manually setting the desired temperature value.

Preferably, the heat-regulating organs further comprise a display organ, e.g. a display, configured for showing information about the operation of the heating element, e.g. the desired temperature for the environment where the heating element is installed and/or the temperature value of the environment as detected by the temperature sensor.

Preferably, the actuator is an electric motor or a solenoid actuator.

Preferably, the processing unit is an electronic card or a chip.

As an alternative to the aforesaid shut-off valve, the heat-regulating organs can comprise an electronic valve or an electronic or electrothermal system.

In one embodiment, the heat-regulating organs can further comprise a thermostat or chrono-thermostat for managing the operation of the heating element.

Preferably, the first battery 4 is configured for electrically supplying at least the actuator, the temperature sensor and the processing unit of the heat-regulating organs 10.

Preferably, the allocating organs 20 are instead included in, or associated to, said second section 5.

Preferably, the allocating organs comprise at least a corresponding processing unit configured for calculating or estimating or measuring the amount of emitted heat, or used thermal energy, over time by the heating element. In one embodiment, this processing unit of the heat-regulating organs can correspond to the aforesaid processing unit of the allocating organs; in essence, in this case the processing unit (e.g. an electronic card) is shared between the heat-regulating organs and allocating organs, and is unique for the whole device. Preferably, the allocating organs comprise a first temperature sensor configured for detecting a first temperature value related to the temperature of the hot fluid entering the heating element.

Preferably, this first temperature sensor is configured for detecting the outer temperature with respect to the environment in which the heating element is installed, or the temperature of the hot fluid entering the heating element, or a surface temperature of the heating element.

In one embodiment, the processing unit of the allocating organs can be configured for receiving from an outer device, e.g. a temperature sensor or a thermostat or a control unit, the aforesaid first temperature value. Preferably, the processing unit of the allocating organs is configured for calculating by way of an algorithm a heat consumption value of the heating element which is related or proportional to the first temperature value. Preferably, the allocating organs can further comprise a second temperature sensor configured for detecting a second temperature value related to the temperature of the environment in which the heating element is installed. Preferably, this second temperature sensor is configured for directly detecting the temperature of the environment in which the heating element is installed, or the temperature of the hot fluid getting back into the heating element.

In one embodiment, the processing unit of the allocating organs can be configured for receiving from an outer device, e.g. a temperature sensor or a thermostat or a control unit, the aforesaid second temperature value. If the second temperature sensor is present, the processing unit of the allocating organs can be configured for calculating by way of an algorithm a heat consumption value of the heating element which is related or proportional to said second temperature value.

Preferably, in one embodiment envisaging two temperature sensors in the allocating organs, the processing unit of the allocating organs can be configured for calculating by means of an algorithm a heat consumption value of the heating element which is related or proportional to the first and to the second temperature value, e.g. which is related or proportional to the difference between the first temperature value and the second temperature value.

Preferably, the allocating organs further comprise a corresponding display organ, e.g. a display, configured for showing information about the operation of the allocating organs themselves, e.g. the amount of emitted heat, or the thermal energy consumed, over time by the heating element, and/or the temperature value detected by the first temperature sensor and/or the temperature value detected by the second temperature sensor. Preferably, the second battery 6 is configured for electrically supplying at least the first temperature sensor, the second temperature sensor and the processing unit of the allocating organs.

Preferably, the display organ of the allocating organs can correspond to the display organ of the heat-regulating organs; in this case the device has one display shared between the different organs and being able to provide information about both ambient heat regulation and radiator consumption allocation.

In one embodiment, the aforesaid first temperature sensor or the aforesaid second temperature sensor of the allocating organs can correspond to the temperature sensor of the heat-regulating organs. In this case, in essence, the temperature sensor of the heat-regulating organs can be shared with the allocating organs and provide a temperature value which is used both for regulating ambient temperature and for calculating radiator consumption.

Preferably, as schematically shown in the figures, the box-shaped body 2 is one only for the whole device 1. Preferably, the first section 3 and the second section 5 are integrated into the box-shaped body 2 (preferably only one body). In other words, the first section and the second section are not distinct or separated but are included in the same box-shaped body of the device.

Preferably, the first section 3 comprises at least the first battery 4 and the second section 5 comprises at least the second battery 6.

It should be pointed out that the first section 3 and the second section 5, integrated into the box-shaped body, can be distinct on a logical or functional level only (as schematically shown in Figure 1), i.e. with the first section functionally associated to the heat-regulating organs and the second section associated to the allocating organs, but they cannot be structurally or physically divided. In other words, except the first and second battery, which are closely includes in the first section and in the second section, respectively, the heat-regulating organs and the allocating organs can be variously distributed in the box-shaped body.

Preferably, the first battery 4 is removably housed in the first section 3. Preferably, the second battery 6 is instead unremovably housed in the second section 5.

Preferably, the first battery 4 is configured for being autonomously replaceable by a user.

Preferably, the second battery 6 is instead configured for not being autonomously replaceable by a user, i.e. for being replaced by a specialized technician only and/or by means of tools.

Preferably, the box-shaped body 2 comprises at the first section an access door 7 configured for selectively enabling the access to the first battery 4 in order to replace it.

Preferably, the box-shaped body 2 is closed with the exception of the access door 7.

Preferably, the box-shaped body comprises assembling organs (not shown), e.g. screws and/or welding points, configured so as to make the device closed and manually inaccessible by a user, except for the access door.

Preferably, the first battery 4 and/or the second battery 6 are of rechargeable type.

In a possible embodiment, the device can comprise recharging organs configured for enabling an electric energy transfer from the first battery to the second battery, so as to recharge the second battery. Preferably, these recharging organs transfer electric energy from the first battery to the second battery when the first battery is charged and/or when the first battery has a charge level above a given charge threshold and/or when the first battery has just been replaced and/or as a result of an external command, e.g. the activation of a recharge button.

In figure 1 letter D schematically shows the electric energy recharging path from the first battery 4 to the second battery 6.

Preferably, the heat-regulating organs comprise a communication unit, configured for communicating with an outer thermostat or chrono-thermostat. In one aspect the communication unit is configured for sending and/or receiving data, e.g. control instructions or temperature values.

Preferably, the allocating organs comprise a corresponding communication unit, configured for communicating with an outer apparatus, e.g. an allocating control unit. Preferably, the communication unit is configured for sending the consumption data as calculated. Preferably, the communication unit is of wireless type and can comprise a radio, wi-fi, Bluetooth, etc. module.

In one embodiment, the communication unit of the allocating organs can coincide with the communication unit of the heat-regulating organs. In practice, the communication unit can be common between the allocating organs and the heat-regulating organs.

In general, the heat-regulating organs 10 and the allocating organs 20 can share between them some component, e.g. the processing unit and/or a temperature sensor and/or a display organ and/or the communication unit.

Preferably, the device comprises a pushbutton station configured for enabling a user to manage the operation thereof, e.g. entering data about heat regulation and/or displaying information about allocation.

Below the method for regulating temperature and for allocating consumption of a heating element according to the present invention is described. This method can be implemented preferably, though not exclusively, by means of a device 1 as described above. In this case the method can correspond to the operating mode of the device 1.

The method of the present invention comprises the following steps:
- providing a device 1 for regulating temperature and for allocating consumption of a heating element comprising:
- a box-shaped body 2;
- heat-regulating organs 10;
- allocating organs 20;
- a first section 3;
- a first electric energy storage organ, or first battery 4;
- a second section 5;
- a second electric energy storage organ, or second battery 6;
- associating or mounting the box-shaped body 2 of the device 1 to a heating element 100, in particular to a radiator;
- selectively operating the device at least between:
- a first operating condition, in which the first battery is charged and supplies at least the heat-regulating organs;
- a second operating condition, in which the first battery is low and the second battery 6 supplies the allocating organs.

Preferably, in the first operating condition the first battery supplies also the allocating organs and the second battery does not supply the allocating organs; as an alternative, in the first operating condition the first battery supplies the heat-regulating organs and the second battery supplies the allocating organs.

More preferably, in the second operating condition the second battery supplies the allocating organs 20 only and the heat-regulating organs are not supplied with power.

Preferably, the passage from the first operating condition to the second operating condition takes place automatically when the first battery is low.

Preferably, in the first operating condition both the heat-regulating organs and the allocating organs operate, and the device acts both as a heat regulator and as an allocator.

Preferably, in the second operating condition only the allocating organs operate and the device acts as an allocator only.

Preferably, the method comprises a further step of replacing the first battery 4 of the device 1 when this is in the second operating condition (i.e. when the first battery 4 is low), such replacement automatically causing the passage from the second operating condition to the first operating condition.

Preferably, the method can comprise a step of transferring electric energy from the first battery 4 to the second battery 6, so as to recharge the second battery. Preferably, this step of transferring electric energy from the first battery to the second battery takes place when the first battery is charged and/or when the first battery has a charge level above a given charge threshold and/or when the first battery has just been replaced and/or as a result of an external command, e.g. the activation of a recharge button.

The invention thus conceived can undergo several changes and variants, all of which fall within the scope of the inventive idea, and the components mentioned can be replaced by other technically equivalent elements.

The invention achieves important advantages. First of all, the invention allows to overcome at least some of the drawbacks of the prior art. As a matter of fact, the device of the present invention has a structure comprising a "main battery" (first battery), which normally supplies both the heat-regulating organs 10 and the allocating organs 20, and its task is basically to operate the whole device, and a "buffer battery" (second battery), which preferably operates only when the main battery is low and only for supplying the allocating organs. It is thus possible never to interrupt the operations of consumption allocation while waiting for specialized personnel to intervene, since it is sufficient to replace the first battery to recover the double heat regulation/allocation function. When the first battery is low, the second "buffer" battery continues to supply the allocating organs, thus allowing the user enough time to autonomously intervene for replacing the first battery: once the replacement is completed, heat regulation functions are resumed while allocation functions were never interrupted.

This occurs in full compliance with the regulation s about consumption allocation, which prohibit an autonomous replacement of an allocator battery. As a matter of fact, in the device of the present invention the second battery (which provides an exclusive, continuous supply to the allocating organs) is not accessible by the user, but it is "shielded" inside the box-shaped body.

Therefore, in essence, the present invention provides a device which is fully compliant with the regulations about consumption allocation, because the second battery is not accessible and, should the first battery be low, the second one operates the allocator but not the heat regulator. Thus, there is never the risk that a user can regulate heat without consumption allocation being active at the same time.

Another advantage of the present invention consists in that it solves the problems of known devices related to the continuous need for an intervention of specialized technicians for battery replacement. The solution to this problem is highly important for service centers, which are hardly able to meet the continuous need for several interventions on large areas for replacing batteries in traditional allocators.

Moreover, the device of the present invention can regulate heat and allocate in an efficient manner and cannot be switched off or tampered with.

In general, the device of the present invention allows to provide a radiator with heat regulation and allocation functions in a simple and rapid manner.

Furthermore, the present invention enables to simplify assembly and maintenance operations on the devices for heat regulation and cost allocation.

Finally, the device of the present invention is characterized by a competitive price and by a simple and rational structure.

## Claims

1. A device (1) for regulating temperature and for allocating consumption of a heating element (100), comprising:
- a box-shaped body (2) configured for being associated or mounted to a heating element (100), in particular to a radiator;
- heat-regulating organs (10) configured for regulating the operation of the heating element so as to obtain a desired temperature in the environment where the radiant element is installed;
- allocating organs (20) configured for calculating the amount of emitted heat, or consumed thermal energy, over time by the heating element;
- a first section (3) inside said box-shaped body (2), selectively accessible from outside with the device mounted and/or installed;
- at least a first battery (4), housed in said first section (3);
the device being **characterised in that** it comprises:
- a second section (5) inside said box-shaped body (2), inaccessible from outside with the device mounted and/or installed;
- at least a second battery (6), housed in said second section (5);
wherein, in a first operating condition in which said first battery (4) is charged, said first battery (4) is configured for supplying at least said heat-regulating organs (10), and in a second operating condition in which said first battery is low, said second battery (6) is configured for supplying said allocating organs (20).

2. The device (1) according to the preceding claim, wherein in said first operating condition said first battery (4) is configured for supplying also said allocating organs (20) and said second battery (6) does not supply the allocating organs (20), or in said first operating condition said first battery (4) is configured for supplying said heat-regulating organs (10) and said second battery (6) is configured for supplying said allocating organs (20), and/or wherein in said second operating condition the second battery (6) supplies said allocating organs (20) only and the heat-regulating organs (10) are not supplied.

3. The device (1) according to claim 1 or 2, wherein in said first operating condition only the first battery (4) operates, supplying both the heat-regulating organs (10) and the allocating organs (20).

4. The device (1) according to any one of the preceding claims, wherein in said second operating condition only the second battery (6) operates, supplying the allocating organs (20) only.

5. The device (1) according to any one of the preceding claims, wherein the heat-regulating organs (10) are included in or associated to said first section (3), and/or wherein the box-shaped body (2) is configured for being mounted to a heating element so that the heat-regulating organs are located at an inlet duct (101) for hot fluid into the heating element.

6. The device (1) according to any one of the preceding claims, wherein the heat-regulating organs (10) comprise:
- at least a shut-off valve for the hot fluid entering the heating element, which can be selectively operated for regulating the amount of hot fluid entering the radiant element as a function of the desired temperature in the environment where the radiant element is installed;
- at least a temperature sensor configured for detecting temperature in the environment where the radiant element is installed;
- an actuator, e.g. an electric motor or a solenoid actuator, operatively acting upon said shut-off valve for selectively controlling the opening or closing thereof, and thus for regulating the amount of hot fluid entering the radiant element, as a function of the difference between the environment temperature value detected by said temperature sensor and said desired temperature for the environment where the radiant element is installed;
- a processing unit configured for managing the operation at least of said temperature sensor and of said actuator;
and/or wherein the first battery (4) is configured for electrically supplying at least said actuator, said temperature sensor and said processing unit of the heat-regulating organs.

7. The device (1) according to any one of the preceding claims, wherein the allocating organs (20) are included in or associated to said second section (5), and/or wherein the allocating organs comprise at least a processing unit configured for calculating or estimating or measuring the amount of emitted heat, or used thermal energy, overtime by the heating element.

8. The device (1) according to any one of the preceding claims, wherein the allocating organs comprise a first temperature sensor configured for detecting a first temperature value related to the temperature of the hot fluid entering the heating element, e.g. a surface temperature of the heating element, and/or wherein the processing unit of the allocating organs is configured for calculating by way of an algorithm a heat consumption value of the heating element which is related or proportional at least to said first temperature value, and/or wherein the second battery (6) is configured for electrically supplying at least said first temperature sensor and said processing unit of the allocating organs.

9. The device (1) according to any one of the preceding claims, wherein said box-shaped body (2) is one only, and/or wherein the first section (3) and the second section (5) are integrated into said box-shaped body, and/or wherein the first section (3) comprises at least said first battery (4) and the second section (5) comprises at least said second battery (6).

10. The device (1) according to any one of the preceding claims, wherein the first battery (4) is removably housed in said first section (3), and wherein the second battery (6) is unremovably housed in said second section (5), and/or wherein the first battery (4) is configured for being autonomously replaceable by a user and the second battery (6) is configured for not being autonomously replaceable by a user.

11. The device (1) according to any one of the preceding claims, wherein the box-shaped body (2) comprises at said first section an access door (7) configured for selectively enabling the access to said first battery in order to replace it, and/or wherein the box-shaped body is closed with the exception of said access door.

12. The device (1) according to any one of the preceding claims, wherein the first battery (4) and/or the second battery (6) are of rechargeable type, and/or wherein the device comprises recharging organs configured for enabling an electric energy transfer from the first battery to the second battery, so as to recharge the second battery, and/or wherein said recharging organs transfer electric energy from the first battery to the second battery when the first battery is charged and/or when the first battery has a charge level above a given charge threshold and/or when the first battery has just been replaced and/or as a result of an external command, e.g. the activation of a recharge button.

13. A method for regulating temperature and allocating consumption of a heating element, comprising the step of providing a device (1) for regulating temperature and for allocating consumption of a heating element comprising:
- a box-shaped body (2) configured for being associated or mounted to a heating element (100), in particular to a radiator;
- heat-regulating organs (10) configured for regulating the operation of the heating element so as to obtain a desired temperature in the environment where the radiant element is installed;
- allocating organs (20) configured for calculating the amount of emitted heat, or consumed thermal energy, over time by the heating element;
- a first section (3) inside said box-shaped body, selectively accessible from outside with the device mounted and/or installed;
- a first battery (4), housed in said first section;
the method being **characterised in that**, in the step of providing a device, the device comprises:
- a second section (5) inside said box-shaped body, inaccessible from outside with the device mounted and/or installed;
- a second battery (6), housed in said second section;
and **in that** the method comprises the steps of:
- associating or mounting said box-shaped body (2) of the device (1) to a heating element, in particular to a radiator (100);
- selectively operating said device (1) at least between:
- a first operating condition, in which said first battery (4) is charged and supplies at least said heat-regulating organs (10);
- a second operating condition, in which said first battery (4) is low and said second battery (6) supplies said allocating organs (20).

14. The method according to the preceding claim, wherein, in said first operating condition, said first battery (4) supplies also said allocating organs (20) and said second battery (6) does not supply the allocating organs, and in said second operating condition the second battery (6) supplies said allocating organs (20) only and the heat-regulating organs (10) are not supplied, and/or wherein the passage from said first operating condition to said second operating condition takes place automatically when the first battery is low.

15. The method according to claim 13 or 14, wherein in said first operating condition both the heat-regulating organs and the allocating organs operate, and the device acts as a heat regulator and as an allocator, and in said second operating condition only the allocating organs operate and the device acts as a allocator only, and/or wherein the method comprises a step of replacing the first battery (4) of the device when the device is in the second operating condition, such replacement automatically causing the passage from said second operating condition to said first operating condition.

## Patentansprüche

1. Vorrichtung (1) zur Temperaturregelung und zur Zuweisung eines Verbrauchs eines Heizelements (100), umfassend:
- einen kastenförmigen Körper (2), welcher dazu eingerichtet ist, einem Heizelement (100), insbesondere einem Radiator, zugeordnet zu sein oder daran montiert zu sein;
- Wärmeregelungsorgane (10), welche dazu eingerichtet sind, den Betrieb des Heizelements derart zu regeln, dass eine gewünschte Temperatur in der Umgebung erhalten wird, in welcher das Strahlungselement installiert ist;
- Zuweisungsorgane (20), welche dazu eingerichtet sind, die Menge durch das Heizelement abgegebener Wärme, oder eingesetzter thermischer Energie, über der Zeit zu berechnen;
- einen ersten Abschnitt (3) innerhalb des kastenförmigen Körpers (2), auf welchen mit der montierten und/oder installierten Vorrichtung selektiv von außerhalb zugegriffen werden kann;
- wenigstens eine erste Batterie (4), welche in dem ersten Abschnitt (3) aufgenommen ist;
wobei die Vorrichtung **dadurch gekennzeichnet ist, dass** sie umfasst:
- einen zweiten Abschnitt (5) innerhalb des kastenförmigen Körpers (2), auf welchen mit der montierten und/oder installierten Vorrichtung nicht von außerhalb zugegriffen werden kann;
- wenigstens eine zweite Batterie (6), welche in dem zweiten Abschnitt (5) aufgenommen ist;
wobei in einem ersten Betriebszustand, in welchem die erste Batterie (4) geladen ist, die erste Batterie (4) dazu eingerichtet ist, wenigstens die Wärmeregelungsorgane (10) zu versorgen, und in einem zweiten Betriebszustand, in welchem die erste Batterie schwach ist, die zweite Batterie (6) dazu eingerichtet ist, die Zuweisungsorgane (20) zu versorgen.

2. Vorrichtung (1) nach dem vorhergehenden Anspruch, wobei in dem ersten Betriebszustand die erste Batterie (4) dazu eingerichtet ist, auch die Zuweisungsorgane (20) zu versorgen, und die zweite Batterie (6) die Zuweisungsorgane (20) nicht versorgt oder in dem ersten Betriebszustand die erste Batterie (4) dazu eingerichtet ist, die Wärmeregelungsorgane (10) zu versorgen, und die zweite Batterie (6) dazu eingerichtet ist, die Zuweisungsorgane (20) zu versorgen, und/oder wobei in dem zweiten Betriebszustand die zweite Batterie (6) nur die Zuweisungsorgane (20) versorgt und die Wärmeregelungsorgane (10) nicht versorgt werden.

3. Vorrichtung (1) nach Anspruch 1 oder 2, wobei in dem ersten Betriebszustand nur die erste Batterie (4) arbeitet, wobei sie sowohl die Wärmeregelungsorgane (10) als auch die Zuweisungsorgane (20) versorgt.

4. Vorrichtung (1) nach einem der vorhergehenden Ansprüche, wobei in dem zweiten Betriebszustand nur die zweite Batterie (6) arbeitet, wobei sie nur die Zuweisungsorgane (20) versorgt.

5. Vorrichtung (1) nach einem der vorhergehenden Ansprüche, wobei die Wärmeregelungsorgane (10) in dem ersten Abschnitt (3) umfasst sind oder diesem zugeordnet sind und/oder wobei der kastenförmige Körper (2) dazu eingerichtet ist, derart an einem Heizelement montiert zu sein, dass die Wärmeregelungsorgane an einem Einlasskanal (101) für heißes Fluid in das Heizelement angeordnet sind.

6. Vorrichtung (1) nach einem der vorhergehenden Ansprüche, wobei die Wärmeregelungsorgane (10) umfassen:
- wenigstens ein Absperrventil für das in das Heizelement eintretende heiße Fluid, welches selektiv betätigt werden kann, um die Menge heißen Fluids, welches in das Strahlungselement eintritt, als eine Funktion der gewünschten Temperatur in der Umgebung zu regeln, in welcher das Strahlungselement installiert ist;
- wenigstens einen Temperatursensor, welcher dazu eingerichtet ist, eine Temperatur in der Umgebung zu erfassen, in welcher das Strahlungselement installiert ist;
- einen Aktuator, z. B. einen Elektromotor oder einen Solenoidaktuator, welcher operativ auf das Absperrventil wirkt, um das Öffnen oder Schließen davon selektiv zu steuern, und somit um die Menge heißen Fluids, welches in das Strahlungselement eintritt, als eine Funktion der Differenz zwischen dem durch den Temperatursensor erfassten Umgebungstemperaturwert und der gewünschten Temperatur für die Umgebung zu regeln, in welcher das Strahlungselement installiert ist;
- eine Verarbeitungseinheit, welche dazu eingerichtet ist, den Betrieb wenigstens des Temperatursensors und des Aktuators zu verwalten;
und/oder wobei die erste Batterie (4) dazu eingerichtet ist, wenigstens den Aktuator, den Temperatursensor und die Verarbeitungseinheit der Wärmeregelungsorgane elektrisch zu versorgen.

7. Vorrichtung (1) nach einem der vorhergehenden Ansprüche, wobei die Zuweisungsorgane (20) in dem zweiten Abschnitt (5) umfasst sind oder diesem zugeordnet sind und/oder wobei die Zuweisungsorgane wenigstens eine Verarbeitungseinheit umfassen, welche dazu eingerichtet ist, die Menge durch das Heizelement abgegebener Wärme, oder eingesetzter thermischer Energie, über der Zeit zu berechnen oder zu schätzen oder zu messen.

8. Vorrichtung (1) nach einem der vorhergehenden Ansprüche, wobei die Zuweisungsorgane einen ersten Temperatursensor umfassen, welcher dazu eingerichtet ist, einen ersten Temperaturwert zu erfassen, welcher sich auf die Temperatur des heißen Fluids bezieht, welches in das Heizelement eintritt, z. B. eine Oberflächentemperatur des Heizelements, und/oder wobei die Verarbeitungseinheit der Zuweisungsorgane dazu eingerichtet ist, mittels eines Algorithmus einen Wärmeverbrauchswert zu berechnen, welcher sich wenigstens auf den ersten Temperaturwert bezieht oder proportional dazu ist, und/oder wobei die zweite Batterie (6) dazu eingerichtet ist, wenigstens den ersten Temperatursensor und die Verarbeitungseinheit der Zuweisungsorgane elektrisch zu versorgen.

9. Vorrichtung (1) nach einem der vorhergehenden Ansprüche, wobei der kastenförmige Körper (2) nur einer ist und/oder wobei der erste Abschnitt (3) und der zweite Abschnitt (5) in dem kastenförmigen Körper integriert sind und/oder wobei der erste Abschnitt (3) wenigstens die erste Batterie (4) umfasst und der zweite Abschnitt (5) wenigstens die zweite Batterie (6) umfasst.

10. Vorrichtung (1) nach einem der vorhergehenden Ansprüche, wobei die erste Batterie (4) entfernbar in dem ersten Abschnitt (3) aufgenommen ist und wobei die zweite Batterie (6) nicht entfernbar in dem zweiten Abschnitt (5) aufgenommen ist und/oder wobei die erste Batterie (4) dazu eingerichtet ist, durch einen Benutzer autonom ersetzbar zu sein, und die zweite Batterie (6) dazu eingerichtet ist, durch einen Benutzer nicht autonom ersetzbar zu sein.

11. Vorrichtung (1) nach einem der vorhergehenden Ansprüche, wobei der kastenförmige Körper (2) an dem ersten Abschnitt eine Zugriffstür (7) umfasst, welche dazu eingerichtet ist, selektiv den Zugriff auf die erste Batterie zu ermöglichen, um sie zu ersetzen, und/oder wobei der kastenförmige Körper mit Ausnahme der Zugriffstür geschlossen ist.

12. Vorrichtung (1) nach einem der vorhergehenden Ansprüche, wobei die erste Batterie (4) und/oder die zweite Batterie (6) von einem wiederaufladbaren Typ sind und/oder wobei die Vorrichtung Wiederaufladeorgane umfasst, welche dazu eingerichtet sind, eine Übertragung elektrischer Energie von der ersten Batterie zu der zweiten Batterie zu ermöglichen, um die zweite Batterie wiederaufzuladen, und/oder wobei die Wiederaufladeorgane elektrische Energie von der ersten Batterie zu der zweiten Batterie übertragen, wenn die erste Batterie geladen ist und/oder wenn die erste Batterie ein Ladeniveau oberhalb eines gegebenen Ladeschwellenwerts aufweist und/oder wenn die erste Batterie gerade ersetzt worden ist und/oder als ein Ergebnis eines externen Befehls, z. B. der Aktivierung einer Wiederaufladeschaltfläche.

13. Verfahren zur Temperaturregelung und zur Zuweisung eines Verbrauchs eines Heizelements, umfassend den Schritt eines Bereitstellens einer Vorrichtung (1) zur Temperaturregelung und zur Zuweisung eines Verbrauchs eines Heizelements, umfassend:
- einen kastenförmigen Körper (2), welcher dazu eingerichtet ist, einem Heizelement (100), insbesondere einem Radiator, zugeordnet zu sein oder daran montiert zu sein;
- Wärmeregelungsorgane (10), welche dazu eingerichtet sind, den Betrieb des Heizelements derart zu regeln, dass eine gewünschte Temperatur in der Umgebung erhalten wird, in welcher das Strahlungselement installiert ist;
- Zuweisungsorgane (20), welche dazu eingerichtet sind, die Menge durch das Heizelement abgegebener Wärme, oder eingesetzter thermischer Energie, über der Zeit zu berechnen;
- einen ersten Abschnitt (3) innerhalb des kastenförmigen Körpers, auf welchen mit der montierten und/oder installierten Vorrichtung selektiv von außerhalb zugegriffen werden kann;
- eine erste Batterie (4), welche in dem ersten Abschnitt aufgenommen ist;
wobei das Verfahren **dadurch gekennzeichnet ist, dass**, in dem Schritt des Bereitstellens einer Vorrichtung, die Vorrichtung umfasst:
- einen zweiten Abschnitt (5) innerhalb des kastenförmigen Körpers, auf welchen mit der montierten und/oder installierten Vorrichtung nicht von außerhalb zugegriffen werden kann;
- eine zweite Batterie (6), welche in dem zweiten Abschnitt aufgenommen ist;
und dass das Verfahren die folgenden Schritte umfasst:
- Zuordnen oder Montieren des kastenförmigen Körpers (2) der Vorrichtung (1) an einem Heizelement, insbesondere einem Radiator (100);
- selektiv Betreiben der Vorrichtung (1) wenigstens zwischen:
- einem ersten Betriebszustand, in welchem die erste Batterie (4) geladen ist und wenigstens die Wärmeregelungsorgane (10) versorgt;
- einem zweiten Betriebszustand, in welchem die erste Batterie (4) schwach ist und die zweite Batterie (6) die Zuweisungsorgane (20) versorgt.

14. Verfahren nach dem vorhergehenden Anspruch, wobei in dem ersten Betriebszustand die erste Batterie (4) auch die Zuweisungsorgane (20) versorgt und die zweite Batterie (6) die Zuweisungsorgane nicht versorgt und in dem zweiten Betriebszustand die zweite Batterie (6) nur die Zuweisungsorgane (20) versorgt und die Wärmeregelungsorgane (10) nicht versorgt werden und/oder wobei der Übergang von dem ersten Betriebszustand zu dem zweiten Betriebszustand automatisch stattfindet, wenn die erste Batterie schwach ist.

15. Verfahren nach Anspruch 13 oder 14, wobei in dem ersten Betriebszustand sowohl die Wärmeregelungsorgane als auch die Zuweisungsorgane arbeiten und die Vorrichtung als ein Wärmeregler und als eine Zuweisungseinrichtung wirkt und in dem zweiten Betriebszustand nur die Zuweisungsorgane arbeiten und die Vorrichtung nur als eine Zuweisungseinrichtung wirkt und/oder wobei das Verfahren einen Schritt eines Ersetzens der ersten Batterie (4) der Vorrichtung umfasst, wenn sich die Vorrichtung in dem zweiten Betriebszustand befindet, wobei ein derartiges Ersetzen automatisch den Übergang von dem zweiten Betriebszustand zu dem ersten Betriebszustand veranlasst.

## Revendications

1. Dispositif (1) de régulation de température et d'allocation de la consommation d'un élément chauffant (100), comprenant :
- un corps en forme de boîte (2) configuré pour être associé ou monté à un élément chauffant (100), en particulier à un radiateur ;
- des organes de régulation de chaleur (10) configurés pour réguler le fonctionnement de l'élément chauffant afin d'obtenir une température souhaitée dans l'environnement où l'élément radiant est installé ;
- des organes d'allocation (20) configurés pour calculer la quantité de chaleur émise, ou d'énergie thermique consommée, dans le temps par l'élément chauffant ;
- une première section (3) à l'intérieur dudit corps en forme de boîte (2), sélectivement accessible depuis l'extérieur avec le dispositif monté et/ou installé ;
- au moins une première batterie (4), logée dans ladite première section (3) ;
le dispositif étant **caractérisé en ce qu'**il comprend :
- une seconde section (5) à l'intérieur dudit corps en forme de boîte (2), inaccessible depuis l'extérieur avec le dispositif monté et/ou installé ;
- au moins une seconde batterie (6), logée dans ladite seconde section (5) ;
dans un premier état de fonctionnement dans lequel ladite première batterie (4) est chargée, ladite première batterie (4) est configurée pour alimenter au moins lesdits organes de régulation de chaleur (10), et dans un second état de fonctionnement dans lequel ladite première batterie est faible, ladite seconde batterie (6) est configurée pour alimenter lesdits organes d'allocation (20).

2. Dispositif (1) selon la revendication précédente, dans ledit premier état de fonctionnement ladite première batterie (4) est configurée pour alimenter également lesdits organes d'allocation (20) et ladite seconde batterie (6) n'alimente pas les organes d'allocation (20), ou dans ledit premier état de fonctionnement ladite première batterie (4) est configurée pour alimenter lesdits organes de régulation de chaleur (10) et ladite seconde batterie (6) est configurée pour alimenter lesdits organes d'allocation (20), et/ou dans ledit second état de fonctionnement la seconde batterie (6) alimente lesdits organes d'allocation (20) uniquement et les organes de régulation de chaleur (10) ne sont pas alimentés.

3. Dispositif (1) selon la revendication 1 ou 2, dans ledit premier état de fonctionnement uniquement la première batterie (4) fonctionne, alimentant à la fois les organes de régulation de chaleur (10) et les organes d'allocation (20).

4. Dispositif (1) selon l'une quelconque des revendications précédentes, dans ledit second état de fonctionnement uniquement la seconde batterie (6) fonctionne, alimentant uniquement les organes d'allocation (20).

5. Dispositif (1) selon l'une quelconque des revendications précédentes, les organes de régulation de chaleur (10) étant inclus ou associés à ladite première section (3), et/ou le corps en forme de boîte (2) étant configuré pour être monté à un élément chauffant de sorte que les organes de régulation de chaleur sont localisés au niveau d'un conduit d'entrée (101) pour le liquide chaud dans l'élément chauffant.

6. Dispositif (1) selon l'une quelconque des revendications précédentes, les organes de régulation de chaleur (10) comprenant :
- au moins une vanne de fermeture pour le liquide chaud entrant dans l'élément chauffant, qui peut fonctionner sélectivement pour réguler la quantité de liquide chaud entrant dans l'élément radiant comme une fonction de la température souhaitée dans l'environnement où l'élément radiant est installé ;
- au moins un capteur de température configuré pour détecter la température dans l'environnement où l'élément radiant est installé ;
- un dispositif d'actionnement, par exemple un moteur électrique ou un actionneur solénoïde, agissant fonctionnellement sur ladite soupape de fermeture pour réguler sélectivement son ouverture ou sa fermeture, et ainsi pour réguler la quantité de liquide chaud entrant dans l'élément radiant, comme une fonction de la différence entre la valeur de température de l'environnement détectée par ledit capteur de température et ladite température souhaitée pour l'environnement où l'élément radiant est installé ;
- une unité de traitement configurée pour gérer le fonctionnement d'au moins ledit capteur de température et ledit dispositif d'actionnement ;
et/ou la première batterie (4) étant configurée pour alimenter électriquement au moins ledit dispositif d'actionnement, ledit capteur de température et ladite unité de traitement des organes de régulation de chaleur.

7. Dispositif (1) selon l'une quelconque des revendications précédentes, les organes d'allocation (20) étant inclus, ou associés, à ladite seconde section (5), et/ou les organes d'allocation comprenant au moins une unité de traitement configurée pour calculer ou estimer ou mesurer la quantité de chaleur émise, ou d'énergie thermique utilisée, dans le temps par l'élément chauffant.

8. Dispositif (1) selon l'une quelconque des revendications précédentes, les organes d'allocation comprenant un premier capteur de température configuré pour détecter une première valeur de température liée à la température du liquide chaud entrant dans l'élément chauffant, par exemple une température de surface de l'élément chauffant, et/ou l'unité de traitement des organes d'allocation étant configurée pour calculer à l'aide d'un algorithme une valeur de consommation de chaleur de l'élément chauffant qui est liée ou proportionnelle au moins à ladite première valeur de température, et/ou la seconde batterie (6) étant configurée pour alimenter électriquement au moins ledit premier capteur de température et ladite unité de traitement des organes d'allocation.

9. Dispositif (1) selon l'une quelconque des revendications précédentes, ledit corps en forme de boîte (2) étant unique, et/ou la première section (3) et la seconde section (5) étant intégrées dans ledit corps en forme de boîte, et/ou la première section (3) comprenant au moins ladite première batterie (4) et la seconde section (5) comprenant au moins ladite seconde batterie (6).

10. Dispositif (1) selon l'une quelconque des revendications précédentes, la première batterie (4) étant logée de manière amovible dans ladite première section (3), et la seconde batterie (6) étant logée de manière non amovible dans ladite seconde section (5), et/ou la première batterie (4) étant configurée pour pouvoir être remplacée de manière autonome par un·e utilisateur·trice et la seconde batterie (6) étant configurée pour ne pas être remplacée de manière autonome par un·e utilisateur·trice.

11. Dispositif (1) selon l'une quelconque des revendications précédentes, le corps en forme de boîte (2) comprenant au niveau de ladite première section une porte d'accès (7) configurée pour permettre sélectivement l'accès à ladite première batterie afin de la remplacer, et/ou le corps en forme de boîte étant fermé à l'exception de ladite porte d'accès.

12. Dispositif (1) selon l'une quelconque des revendications précédentes, la première batterie (4) et/ou la seconde batterie (6) étant du type rechargeable, et/ou le dispositif comprenant des organes de recharge configurés pour permettre un transfert d'énergie électrique depuis la première batterie vers la seconde batterie, afin de recharger la seconde batterie, et/ou lesdits organes de recharge transférant l'énergie électrique depuis la première batterie vers la seconde batterie lorsque la première batterie est chargée et/ou lorsque la première batterie présente un niveau de charge supérieur à un seuil donné de charge et/ou lorsque la première batterie ajuste été remplacée et/ou en résultat d'une commande externe, par exemple de l'activation d'un bouton de recharge.

13. Procédé de régulation de la température et d'allocation de la consommation d'un élément chauffant, comprenant l'étape de fourniture d'un dispositif (1) pour réguler la température et pour allouer la consommation d'un élément chauffant comprenant :
- un corps en forme de boîte (2) configuré pour être associé ou monté à un élément chauffant (100), en particulier à un radiateur ;
- des organes de régulation de chaleur (10) configurés pour réguler le fonctionnement de l'élément chauffant afin d'obtenir une température souhaitée dans l'environnement où l'élément radiant est installé ;
- des organes d'allocation (20) configurés pour calculer la quantité de chaleur émise, ou d'énergie thermique consommée, dans le temps par l'élément chauffant ;
- une première section (3) à l'intérieur dudit corps en forme de boîte, sélectivement accessible depuis l'extérieur avec le dispositif monté et/ou installé ;
- une première batterie (4), logée dans ladite première section ;
le procédé étant **caractérisé en ce que**, dans l'étape de fourniture d'un dispositif, le dispositif comprend :
- une seconde section (5) à l'intérieur dudit corps en forme de boîte, inaccessible depuis l'extérieur avec le dispositif monté et/ou installé ;
- une seconde batterie (6), logée dans ladite seconde section ;
et **en ce que** le procédé comprend les étapes de :
- association ou montage dudit corps en forme de boîte (2) du dispositif (1) à un élément chauffant, en particulier à un radiateur (100) ;
- fonctionnement de manière sélective dudit dispositif (1) au moins entre :
- un premier état de fonctionnement, dans lequel ladite première batterie (4) est chargée et alimente au moins lesdits organes de régulation de chaleur (10) ;
- un second état de fonctionnement, dans lequel ladite première batterie (4) est faible et ladite seconde batterie (6) alimente lesdits organes d'allocation (20).

14. Procédé selon la revendication précédente, dans ledit premier état de fonctionnement, ladite première batterie (4) alimente également lesdits organes d'allocation (20) et ladite seconde batterie (6) n'alimente pas les organes d'allocation, et dans ledit second état de fonctionnement la seconde batterie (6) alimente lesdits organes d'allocation (20) uniquement et les organes de régulation de chaleur (10) ne sont pas alimentés, et/ou le passage depuis ledit premier état de fonctionnement vers ledit second état de fonctionnement a lieu automatiquement lorsque la première batterie est faible.

15. Procédé selon la revendication 13 ou 14, dans ledit premier état de fonctionnement à la fois les organes de régulation de chaleur et les organes d'allocation fonctionnent, et le dispositif agit comme régulateur de chaleur ou comme dispositif d'allocation, et dans ledit second état de fonctionnement uniquement les organes d'allocation fonctionnent et le dispositif agit uniquement comme dispositif d'allocation, et/ou le procédé comprenant une étape de remplacement de la première batterie (4) du dispositif lorsque le dispositif se trouve dans le second état de fonctionnement, de sorte que le remplacement amène automatiquement le passage depuis ledit second état de fonctionnement vers ledit premier état de fonctionnement.
